# EUROPEAN PATENT APPLICATION

(11) **EP 4 277 310 A1**
(43) Date of publication of application: **15.11.2023**
(21) Application number: 22173071.6
(22) Date of filing: 12.05.2022
(51) Int. Cl.: H04W 4/40, H04L 67/00

(54) **METHOD AND SYSTEM FOR DATA TRANSFER FROM A VEHICLE**

(71) Applicant: Aptiv Technologies Limited, St. Michael (BB)
(72) Inventor: Konrad, Thomas, Schwelm (DE); Cremer, Peet, Düsseldorf (DE); Feldmann, Anton, Oelde (DE)
(74) Representative: Novagraaf International SA

(57) **Abstract**

Data collection in a vehicle is used for purposes of creating training data for artificial intelligence or machine learning algorithms for use in vehicles. The collected data is transmitted from the vehicle to a data warehouse by way of a remote system. A method comprises a step of collecting sensor data from one or more vehicle sensor units. The collected sensor is evaluated based on a set of criteria. Subsequently, one or more data logs are created based on the collected sensor data. In a further step, the one or more data logs are pushed to a remote system via a data connection.

## Description

### TECHNICAL FIELD

The present disclosure relates to the field of data communication, and in particular to data transmission from a mobile system to a data storage facility. Such a system can be used for example in a vehicle during testing or trial operations.

### BACKGROUND

Large amounts of data are collected by modern vehicles during normal operation as well as during testing or trial operations. This data is used for analysis and developmental purposes, as well as for maintenance and repair. A particular use is collection of data for purposes of creating training data for artificial intelligence or machine learning algorithms for use in vehicles.

A known method of handling such data is to record it on a storage device in the vehicle. On return to its base of operations, the data can be extracted from the storage device, stored in a suitable device and subsequently analyzed. This is time consuming and results in time delays before the data can be analyzed and evaluated.

Another method is to transmit data from the vehicle to the base of operations during operation of the vehicle (e.g., during a vehicle test). However, if the data is confidential, the security of such transfers is a concern. Typical security measures, such as using a VPN connection, can seriously hamper transfer bandwidth from the vehicle to the base of operations. Further, data transfers from a vehicle are susceptible to interruption if the vehicle enters into an area with reduced or missing data network coverage.

Therefore, there is a need for an improved method and system for transferring data from a vehicle to a data storage facility (e.g., a 'data warehouse').

### SUMMARY

The present disclosure concerns a method for transmitting data from a vehicle, the method comprising:
collecting sensor data from one or more vehicle sensor units;
determining a relevant portion of the collected sensor data by validating the collected sensor data based on a set of validation criteria and evaluating the collected sensor data based on a set of criteria;
creating one or more data logs based on the collected sensor data; and
pushing the one or more data logs to a remote system via a data connection.

Additional features of the method will be apparent from the dependent claims.

The present disclosure further concerns a method for receiving and transmitting data at a device, the method comprising:
receiving one or more data logs from a vehicle device, the data logs comprising a relevant portion of collected sensor data collected by one or more vehicle sensor units, the relevant portion being determined by validating the collected sensor data based on a set of validation criteria and evaluating the collected sensor data based on a set of evaluation criteria;
creating at least one data file based on the one or more received data logs; and
pushing the at least one data file to a data warehouse.

The present disclosure additionally concerns a system for transmitting data from a vehicle, the system being configured to carry out the first method as set out above.

The present disclosure also concerns a system for receiving and transmitting data, the system being configured to carry out the second method as set out above.

The system may the comprise a server or cloud computing device.

The present disclosure additionally concerns a system for transmitting data from a vehicle, wherein the system comprises: a vehicle system in the vehicle, the vehicle system being configured to carry out at least some of the steps of the first method set out above; and a remote system, the remote system being configured to carry out the second method as set out above.

The remote system may comprise a server or cloud computing device.

The present disclosure further concerns a non-transitory computer readable medium including program instructions for causing a system to carry out the method as set out above.

The present disclosure additionally concerns a vehicle integrating a vehicle system, wherein the vehicle system is configured to carry out at least some of the steps of the method as set out above.

### BRIEF DESCRIPTION OF THE DRAWINGS

Other features, purposes and advantages of the invention will become more explicit by means of reading the detailed statement of the non-restrictive embodiments made with reference to the accompanying drawings.
Figure 1 shows a distributed system for transmitting data from a vehicle to a remote system, according to a first embodiment of the present invention.
Figure 2 illustrates a method for the distributed system of Figure 1.
Figure 3 illustrates a distributed system for transmitting data from a vehicle to a data warehouse.
Figure 4 shows a method for the distributed system of Figure 3.

### DETAILED DESCRIPTION

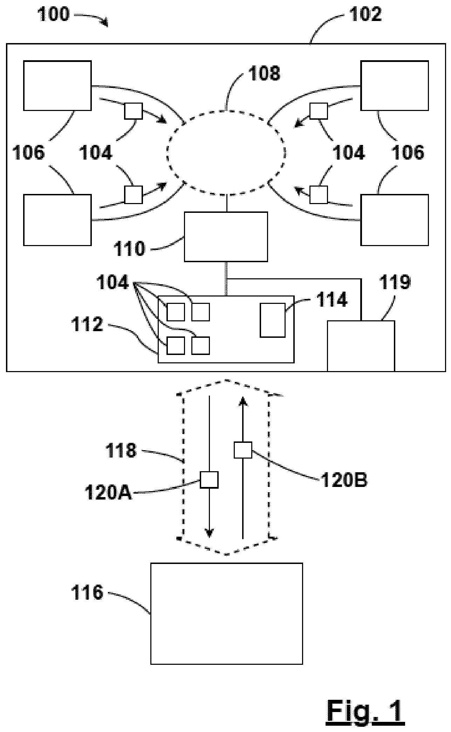

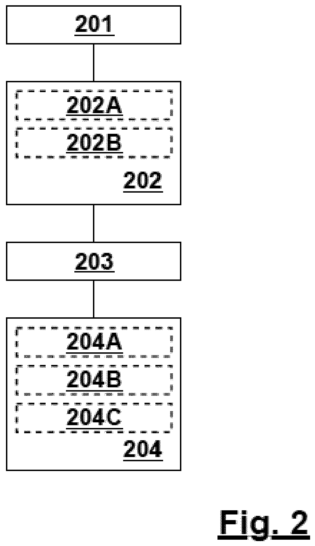

An exemplary system 100 and method will now be discussed with reference to Figure 1 and Figure 2.

A vehicle 102 is being operated by a driver or other person. Throughout operation, the vehicle may be both stationary and moving. The vehicle may move throughout a wide geographical area during operation. It will be appreciated that connectivity between the vehicle and remote devices or communications networks may vary throughout operation of the vehicle. For example, the vehicle may pass through an area where network coverage is limited or missing entirely. In other areas, network coverage may be impaired by man-made structures, or may suffer from interference from other networks or other devices or systems that emit electromagnetic radiation.

The system may comprise any suitable combination of hardware and software elements or components. In the following, a number of components and elements will be referred to in general terms. It will, of course, be appreciated that this is purely for illustrative and explanatory purposes and that it is not intended to be limiting. It will further be appreciated that the specific implementation of the components, and by extension the method steps performed by such components as discussed in the present disclosure, may be dependent on the type and properties of the hardware and/or software components of the system. Accordingly, the method and system as described in the following may be implemented in any suitable combination of hardware and software components.

In a first step 201, sensor data 104 is collected from one or more vehicle sensor units 106. The vehicle may comprise any suitable number of vehicle sensor units. The vehicle sensor units may be of any suitable type. The vehicle sensor units can be sensors integrated into the vehicle, e.g., by the manufacturer. The majority of modern vehicles comprise a plurality of sensors to monitor operation of the vehicle. Examples of such integrated vehicle sensor units include, without limitation: pressure sensors, temperature sensors, fuel level sensors, strain measurement sensors; vibration sensors; inclination sensors; positional or navigational sensors; external monitoring sensors; or internal monitoring sensors. The vehicle sensor units can additionally or alternatively be temporarily fitted to the vehicle, e.g., for purposes of testing or trials. Examples of such sensor units include (without limitation): pressure sensors, temperature sensors, fuel level sensors, strain measurement sensors; vibration sensors; inclination sensors; positional or navigational sensors; external monitoring sensors; or internal monitoring sensors. Typically, the data collected is associated with one or more systems or parts of the vehicle and relates directly or indirectly to the operation thereof. The sensor data 104 may have any suitable format, structure, encoding or properties.

In some examples, the sensor data is collected continuously. In other examples the sensor data is collected continually. In some examples, the sensor data is collected only when a user initiates data collection.

The sensor data 104 may be collected in any suitable fashion by a suitable component or system. In the present example, each of the vehicle sensor units is connected to a vehicle network 108. A central processing unit 110 is also connected to the vehicle network, and during operation the central processing unit collects the sensor data. The sensor data is stored in a suitable memory or storage unit 112.

The sensor data may be stored in any suitable fashion. In some examples, the sensor data is stored as a single block, e.g., a binary file. In other examples, the sensor data is stored in a plurality of blocks. The sensor data may be divided into the plurality of blocks based on a suitable set of requirements, parameters or criteria. In some examples, each data element contains sensor data corresponding to a specific collection period for the one or more vehicle sensors. In an example, each data element comprises sensor data for a 60 second collection period. In other examples, each data element comprises sensor data for a different length of collection period.

In a second step 202, a relevant portion of the collected sensor data is determined by validating the collected sensor data based on a set of validation criteria and evaluating the collected sensor data based on a set of evaluation criteria. The determining step may be performed in a suitable manner and by way of suitable methodologies. For illustrative purposes, in the present example, the determining step comprises two sub-steps: a validation sub-step and an evaluation sub-step. The sub-steps will be described in more detail in the following. It will nevertheless be appreciated that, although described as discrete sub-steps, the validation and evaluation sub-steps can, in principle, equally well be performed as a combined step. Further, it will be appreciated that the second step may, in some examples, comprise alternative or additional sub-steps.

In a first sub-step 202A, the collected sensor data 104 is validated based on a set of validation criteria. The evaluation step may be performed in any suitable manner and by way of a suitable methodology. The validation step, in some examples, comprises a single validation operation. In other examples, the validation step comprises a plurality of validations operations or sub-steps.

Any suitable set of validation criteria may be employed to perform the validation step. The set of criteria may contain any suitable number of specific criteria. In some examples, the evaluation step comprises determining or checking whether the collected sensor data conforms to one or more of (without limitation): an expected number of individual files; an expected file size; an expected file format; or an expected data range for at least a portion of the data contained in the collected sensor data. Such a check ensures that the collected sensor data is suitable for processing or use in subsequent stages of the method and/or by other devices, such as the remote device or a data warehouse.

Purely by way of an illustrative example, for a particular vehicle and a particular set of vehicle sensors, a specific number of files having a specific file format and a specific size is expected, such as one sensor data file having the specific file format and the specific size for each vehicle sensor in the set. In this illustrative example, the set of validation criteria specifies the expected number of files, the expected file format and the expected file size. Once the sensor data is collected, the sensor data is matched for conformance with the set of criteria. If the collected sensor data conforms, subsequent steps in the present method can be performed. It will be appreciated that a number of administrative or operational sub-steps may be performed as part of the validation step, including, without limitation, formatting, encoding or renaming.

As discussed above, the set of validation criteria, in some examples comprises one or more expected file formats or file types. Examples of expected file types include, without limitation: log files; timing or synchronization files; or binary data files. Examples of expected file formats include, but are not limited to: PCAP; DVL; or PCT. The set of validation criteria, in some examples, additionally or alternatively comprises an expected file sizes range for each of the one or more expected file formats. Examples of expected file size ranges include (without limitation): 1 to 4 GByte for PCAP files; or 1 to 4 GByte for DVL files. File size ranges vary in dependence on a number of factors, and an expected file size range may therefore be specified or determined based on a case-by-case basis. In a specific example, the set of validation criteria comprises one or more expected file formats and an expected file size range for each of the one or more expected file formats. By including both the file type and size requirements, the risk of files containing unusable data being transmitted to a remote device is reduced significantly.

In order for the validation step to be considered completed, the collected sensor data 104 may be required to conform to any suitable or relevant number of the specific criteria in the set of criteria. In some examples, all of the specific criteria in the set of criteria must be met in order for the evaluation step to be considered completed. In some examples, a subset of criteria of the set of criteria must be met. Any suitable subset may be required, and any such subset may be selected in a suitable fashion. This enables a controlling entity to ensure that the collected sensor data has a suitable or desired set of properties. In other terms, it allows the controlling entity to ensure that only suitable data are processed further.

The validation step may be performed by any suitable element or component of the system. In the present example, the evaluation step is performed by the central processing unit 110.

In the system described herein, the subsequent steps will only be carried out in respect of the collected sensor data 104 if the set of evaluation criteria is met to a suitable or defined degree.

As discussed above, performing the validation step ensures that the collected data is usable and suitable for carrying out subsequent processing, which may be carried out by the system or by a remote device. In particular, it is avoided that potentially unusable data is uploaded to a remote device. Given that the bandwidth of a data connection between a vehicle and a remote device may be limited, uploading a dataset may take a significant amount of time. If subsequently found to contain unusable data, it would be necessary to reupload the data, which would result in substantial delays. By validating the data prior to upload, the risk of such delays is mitigated.

In a second sub-step 202B, the collected sensor data is evaluated based on a set of evaluation criteria. The evaluation step may be performed in a suitable manner and using a suitable set of evaluation criteria. In some examples, the evaluation step comprises a single evaluation operation. In other examples, the evaluation step comprises a plurality of evaluation operations.

In the evaluation step, the collected data is evaluated for relevance in accordance with the set of evaluation criteria. For example, it may be determined that the collected data relates to a situation where a machine learning algorithm is not functioning acceptably or correctly. In another example, it may be determined that the collected data relates to one or more situations that are not represented in a database of vehicle data. In another example, it may be determined that the collected data relates to one or more situations that are underrepresented in a database of vehicle data.

It will be appreciated that a number of specific evaluation criteria and methodologies may be envisaged. An illustrative example of an evaluation step of collected data is described in European patent application EP 21191933.7, filed on 18 August 2021 and owned by Aptiv Technologies Limited. In this example, data is collected from a fleet of vehicles. A data value metric is defined that relates to a data collection target. Each piece of data is assigned a data value, said data value representing an amount of progress towards the collection target. A second illustrative example is described in European patent application EP 21191928.7, filed on 18 August 2021 and owned by Aptiv Technologies Limited. In this example, historical recording data is used to generate training data, which is subsequently segmented. For each segment, a value is computed. The training data is then used to estimate a value density for each segment of subsequently recorded data, the value density being used to evaluate the recorded data.

In a third step 203, one or more data logs 114 are created based on the collected sensor data. The creation step may be performed in any suitable fashion and by a suitable component or element of the system 100. In an example, the data logs are created by the central processing unit 110 or a component thereof. Once created, the one or more data logs 114 may be stored in the storage unit 112. In the present example, the step of creating comprises performing a formatting operation on the collected sensor data.

It will, of course, be appreciated that one or more ancillary or additional operations may be performed as part of the creation step, such as, but not limited to, encoding, encryption or other administrative operations.

The data logs 114 may have any suitable format, structure, encoding or properties. In some examples, the data logs have a predefined format or structure. In some examples, the predefined format is selected to match or be usable by other, external systems. It will be appreciated that a number of data formats or types may be envisaged within the scope of the present disclosure. The data logs may comprise any suitable number of individual components or files. In some examples, data logs each comprise a single file containing data. In other examples, data logs each comprise a plurality of files containing data. Additionally, in some examples, data logs each comprise one or more additional components, e.g., metadata. For purposes of conciseness and ease of explanation, the collective term 'data logs' will be used in the following to describe any combination of data-carrying files, metadata or other files.

In a fourth step 204, the one or more data logs 114 are pushed to a remote system or device 116 via a data connection 118. The one or more data logs may be pushed in any suitable fashion and by way of a suitable methodology or technology. In an example, the data push is performed by a communication component 119.

In some examples, the system performs one or more pre-push operations or sub-steps, including, but not limited to, formatting, encoding, or encryption as part of the push step. Such operations are typically undertaken in order to ensure that the data logs 114 can be transmitted through a communications network and/or suitably received and handled at a receiving entity. In some circumstances, such sub-steps are performed to ensure the integrity of the data, e.g., to prevent unauthorized access to the data in the event that the data is intercepted during transit.

The remote system 116 may be any suitable device, system or entity. In some examples, the remote system is a mobile device (e.g., a smart phone or a tablet device). In other examples, the remote system is a personal computing device (e.g, a desktop computer or a laptop computer). In other devices is a server or cloud storage device.

Any suitable data connection 118 may be used for to transfer the data logs from the vehicle 102 to the remote system 116. In some examples, the data connection is a wireless network, such as (without limitation): a mobile network, e.g., 4G or 5G networks; a WiFi network; a radio communications network; or a satellite communications network. In other examples, the data connection is a device-to-device wireless connection, e.g., a Bluetooth connection. In other examples, the data connection is a wired data connection, such as an Ethernet connection via a suitable network. The data connection 118 may utilize any suitable, relevant or advantageous file or data transfer methodology or methodologies. The file transfer methodology to be used may depend on any number of factors, including (without limitation): the properties of the data logs; the properties of the data connection 118; the properties of the system 100; the properties of the remote device 116; or the properties of the file transfer methodology. In some examples, the data connection is an encrypted connection. In some examples, the data connection utilizes a Virtual Private Network. In an example, a SSL certificate is used to encrypt the data connection. In another example, a TSL certificate is used to encrypt the data connection By using SSL or TSL certificates, a direct connection is enabled between the system and the remote device, thereby obviating the need for connecting via third party entities or servers.

It will be appreciated that a number of suitable file transfer methodologies exist that can be employed within the scope of the present disclosure. Examples of such file transfer methodologies include, without limitation: Bittorrent; FTP; SFTP; or rsync.

In the above, a single instance of the file transfer methodology has been described. It is to be noted that this is purely for purposes of ease of explanation and conciseness. In some examples, a plurality instances of the file transfer methodology are used. Some types of file transfer methodologies support the use of multiple parallel instances for transmitting data files.

Similarly, in the above, only a single data connection has been described. This is purely for purposes of ease of explanation and conciseness, and is in no way to be taken as a limitation. In principle, a plurality of data connections could equally well be utilized by the system. Some file transfer methods support the use of multiple parallel data connections.

It will be appreciated that the above-described steps are exemplary only and serve to illustrate the present method and system. In some examples, the method comprises one or more additional or alternative steps. In some examples, the one or more of the above-described method steps comprises one or more sub-steps.

In an example, the method additionally comprises a step 204A of verifying a data connection 118 between the vehicle 102 and the remote system 116. The verification may be performed in a suitable fashion. In some examples, the verification step is dependent on the type and properties of one or more of the system 100, the vehicle 102, the remote device 116, or data connection 118.

In the present example, the verifying sub-step is performed by the system 100 transmitting to a remote receiving device a verification message 120A. If the system receives a suitable response 120B, the data connection 118 is deemed to be verified and suitable for transmitting the data logs and/or other relevant data from the vehicle to the receiving device.

In other examples, the verifying sub-step comprises alternative or additional verification operations intended to ensure that the data logs are correctly pushed to the remote system. Exemplary verification operations include, but are by no means limited to: verifying the number of data logs or parts thereof; verifying the properties (e.g., format, size, encryption or encoding) of the data logs; or validating one or more checksums relating to one or more of the data logs. The verification sub-step may be performed prior to the data logs being pushed and/or after receipt at the remote system. The verification sub-step may, in some examples, be carried out in addition to any sensor data verification, such as is described with reference to the evaluation step above, or as an alternative thereto.

In an example, the method additionally comprises a step 204B of detecting an interruption in the data connection 118 and step of pushing the one or more data logs 114 to the remote system 116. The interruption in the data connection may be detected in any suitable fashion by way of a suitable mechanism. It will be appreciated that, in some examples, the detection step is dependent on the type or properties of one or more of: the system 100, the remote system 116; the data logs 114; or the data connection 118. Purely for illustrative purposes, in an example, the data connection is implemented to enable two-way communication (such as a TCP connection). In this example, interruption in the data connection is detected if no acknowledgment is received for a particular data packet. In another example, interruption in the data connection is detected if no acknowledgment is received within the timeout period. It will be appreciated that alternative methodologies may be envisaged. In one example, either of the system 100 or the remote system 116 transmits a heartbeat to the other. In such a situation, an interruption is detected if the heartbeat is not received.

Once an interruption in the data connection 118 is detected, the data push is interrupted or paused. This may be accomplished in any suitable fashion. It will be appreciated that this may depend on the properties of one or more of the protocols or data structures being employed by the system 100, the data connection 118, and/or the remote system 116. For example, in some situations, a file transfer methodology may automatically interrupt a data push if the data connection is interrupted.

In a specific example, the method additionally comprises a step 204C of detecting reestablishment of the data connection 118 and, when reestablishment of the data connection 118 is detected, resuming the data push of the one or more data logs 114 to the remote system 116. The reestablishment of the data connection may be detected in any suitable fashion.

In some known systems, if a data transfer is interrupted, it is not possible to resume the data transfer from the point of interruption, thereby necessitating that the data transfer be restarted. This is inconvenient since it will increase the amount of time taken to complete the data transfer. Additionally, if the data connection 118 is unstable, e.g., due to the vehicle moving through an area of incomplete network coverage, it may take several attempts before the data transfer can be completed.

In the present method, the data push may be resumed in a suitable manner and from a suitable point in the data transfer. In the present example, the data transfer is resumed from the point of interruption. As part of the resumption, in some examples, it is determined where the interruption occurred. This may be accomplished in a number of ways, and is at least in some cases dependent on one or more of the file transfer methodology, the properties of the data log, or the properties of the data connection. In the present example, once the connection is reestablished, the data push is resumed at the end of the interrupted portion of the data logs. Specifically, the data push is interrupted at the current end of the file under transfer when the interruption happened. In some examples, a validation sub step is performed as part of the reestablishment step, to verify the status or properties of the file under transfer. This may involve a determination of the percentage of the file under transfer that has been received at the remote system 116. If the validation step is unsuccessful, for example if it cannot be established how much of a file under transfer has been received, the data push is resumed at the beginning of the file under transfer. This description of the validation sub step, as will be appreciated, is only exemplary and not intended to be limiting. A number of specific implementations of the validation sub step may be envisaged, some of which may be dependent on the properties of one or more of the system, the remote system, the data connection, or the data logs.

It will, of course, be appreciated that the system and the method therefor may comprise additional or alternative steps to those described above.

In some examples, once the data logs have been transmitted to the remote system, they are parsed and transmitted to a second remote system where they can be securely stored. In such examples, the remote system functions as a transient or temporary storage for the data logs. In some examples, the second remote system functions as a backup storage for the data logs.

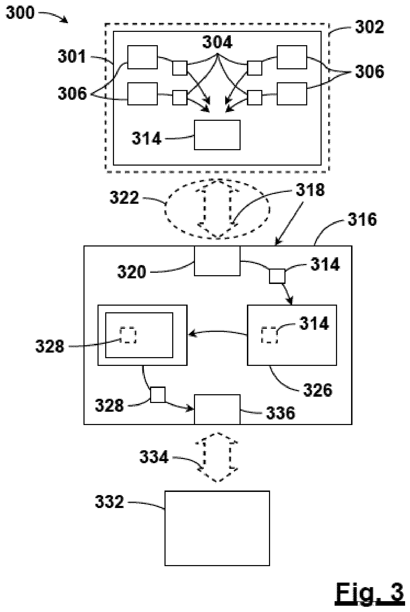

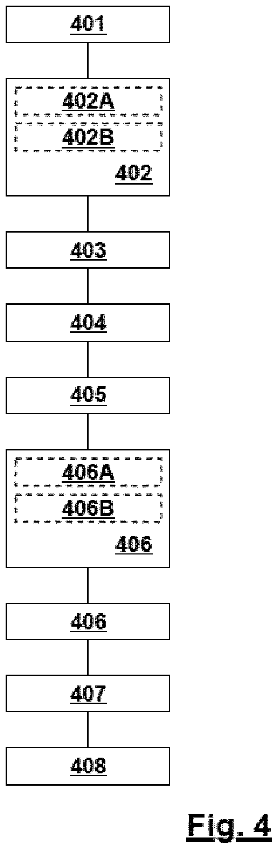

A second exemplary system 300 and method will now be discussed with reference to Figure 3 and Figure 4. For ease of comparison with Figure 1, elements of Figure 3 similar to corresponding elements of Figure 1 are labelled with reference signs similar to those used in the preceding Figures, but with prefix "3". It will be appreciated that, for purposes of clarity, some of the features or elements of Figure 1 are not described in the following, but that such features or elements may nevertheless be present. For purposes of conciseness and clarity, only features and elements that differ substantially from corresponding features and elements described above will be discussed in detail in the following.

In the present example, the system 300 comprises a vehicle system 301 comprised in a vehicle 302. The vehicle system comprises a number of components that are substantially identical to those described in the preceding example.

In a first step 401, sensor data 304 is collected from one or more vehicle sensor units 306 installed in the vehicle 302. The collection step may be performed in any suitable fashion. In the present example, the collection step is substantially identical to that described in the above example.

In a second step 402, a relevant portion of the collected sensor data is determined by validating the collected sensor data based on a set of validation criteria and evaluating the collected sensor data based on a set of evaluation criteria. The determining step may be performed in a suitable manner and by way of suitable methodologies. Similarly to the above example, in the present example, the determining step comprises two sub-steps, as will now be discussed.

In a first sub-step 402A, the collected sensor data 304 is validated based on a set of validation criteria. The validation step may be performed in any suitable manner and by way of a suitable methodology. In the present example, the validation step is substantially identical to that described in the above example.

In a second sub-step 402B, the collected sensor data 304 is evaluated based on a set of evaluation data. The evaluation step may be performed in any suitable manner and by way of a suitable methodology. In the present example, the evaluation step is substantially identical to that described in the above example.

In a third step 403, one or more data logs 314 are created based on the collected sensor data. The creation step may be performed in any suitable fashion. In the present example, this step is substantially identical to that described in the above example.

In a fourth step 404, the one or more data logs 314 are pushed to a remote system or device 316 via a data connection 318. This step may be performed in any suitable fashion. In the present example, the push step is performed substantially in an identical fashion to the push step described in the example above.

In a fifth step 405, the one or more data logs 314 are received. The one or more data logs may be received in any suitable manner by a suitable element or component. In the present example, the data logs are received by a communication component 320 of the remote system 316.

As described in the above example, the remote system 316 may have take any suitable form. In the present example, the remote system is a cloud storage system connected to a communication network 322 through which the data connection 318 to the vehicle system 302 is maintained. The remote system comprises a processing unit 324 and a storage component 326. Although individual components or elements of the remote system may be referred to, it should be understood that any such element may in reality be comprised of a plurality of physical and remotely located components. Purely by way of example, the processing unit 324 may be comprised of a plurality of processing units located in a plurality of computing devices (e.g., server devices), all of which may be located remotely from each other.

On receipt, the received data logs 314 are stored in the storage component 326 of the remote device 316. In some examples, one or more operations may be performed on the received data logs. This could, for example, involve formatting, encoding or encryption of the data logs prior to or during storage operations.

The received data logs 314 comprise sensor data from the vehicle. In other terms, the data logs are partially or entirely comprised of raw data obtained during data recording sessions. In some circumstances, this raw data is usable by other systems and can be directly used by a third system (e.g., a data evaluation system). In other circumstances, however, the data contained in the data logs is not immediately usable by the third system and must be treated or parsed.

In a sixth step 406, at least one data file 328 is created based on the one or more received data logs 314. The at least one data file may be created in any suitable fashion by a suitable component.

The step of creating, in some examples, comprises a number of sub-steps. In the present example, the step of creating comprises two sub-steps. In a first sub-step 406A, the received data logs 314 are checked according to a set of checking criteria. Any suitable set of criteria may be employed. In the present example, it is verified that the data logs are complete or that they form a completed set. This ensures that the data logs have been completely and correctly transmitted from the vehicle 302 to the remote system 316. In some examples, the set of criteria is substantially identical to the completion verification for the individual data logs (as described above). In other examples, a plurality of data logs form a completed set. This may, for example, be the case if each data log relates to only a specific subset of the vehicle systems. In such a case, the completion verification check is performed to ensure that data logs for all the subsets of the vehicle's systems have been stored in the remote device before initiating creation of the at least one data file.

In a second sub-step 406B, the received data logs 314 are parsed by a parsing module 330 based on a set of parsing criteria, which outputs the at least one data file 328. The parsing module parses the data logs in a suitable fashion and using a suitable set of parsing criteria. As described above, the parsing step renders the received data logs usable by subsequent systems, e.g., for purposes of creating training data for a ML algorithm, for performing analysis, or for further subsequent data operations.

In the present example, the parsing module 330 is shown as forming part of the processing unit 324 of the remote system 316. However, it will be appreciated that this is purely for illustrative and explanatory purposes, and that the parsing module may, in principle, be a separate component from the processing unit.

In an seventh step 407, the at least one data file 328 is pushed to a data warehouse 332 by way of a second data connection 334. The data push may be carried out in any suitable fashion. In the present example, the at least one data file 328 is transmitted by way of a second communication component 336. Whilst shown as separate from the communication component 320, this communication component may be the same component in some examples.

In an eighth step 408, the at least one data file 328 is received in the data warehouse 332. The at least one data file may be received in a suitable fashion and by way of a suitable communications component (not shown) of the data warehouse. Subsequent to reception, the at least one data file may be handled or analyzed in a relevant or suitable fashion.

In the above examples, data logs are created and transferred from a single vehicle. This is purely for exemplary and illustrative purposes. In principle, it is possible to collect and transfer data logs from a number of vehicles to one or more remote devices.

It will be understood that various modifications and/or improvements obvious to the person skilled in the art may be made to the various embodiments of the invention described in the present description without departing from the scope of the invention defined by the appended claims.

## Claims

1. A method for transmitting data from a vehicle to a remote system, the method comprising:
collecting sensor data from one or more vehicle sensor units;
determining a relevant portion of the collected sensor data by validating the collected sensor data based on a set of validation criteria and evaluating the collected sensor data based on a set of evaluation criteria;
creating one or more data logs based on the relevant portion of the collected sensor data; and
pushing the one or more data logs to a remote system via a data connection.

2. A method according to claim 1, further comprising verifying a data connection between the moving vehicle to a remote device, the remote device being configured to perform at least some of the method steps.

3. A method according to any preceding claim, further comprising:
detecting an interruption in the data connection; and
interrupting the step of pushing the one or more data logs to the remote system.

4. A method according to claim 3, further comprising:
detecting reestablishment of the data connection; and
when reestablishment of the data connection is detected, resuming the data push of the one or more data logs to the remote system.

5. A method according to any preceding claim, wherein the step of pushing the one or more data logs comprises transferring the one or more data logs using a first file transfer method.

6. A method according to claim 5, wherein the step of pushing the one or more data logs comprises transferring a plurality of data logs in parallel using a plurality of instances of the first file transfer method.

7. A method according to any of claims 1 to 6, wherein the step of creating one or more data logs comprises performing a formatting operation on the collected sensor data.

8. A method according to any of claims 1 to 7, wherein the set of validation criteria comprises one or more expected file formats.

9. A method according to claim 8, wherein the expected file formats comprise one or more of: PCAP; DVL; or PCT.

10. A method according to claim 8 or claim 9, wherein the set of validation criteria comprises an expected file size range for each of the one or more expected file formats.

11. A method for receiving and transmitting data at a device, the method comprising:
receiving one or more data logs from a vehicle device, the data logs comprising a relevant portion of collected sensor data collected by one or more vehicle sensor units, the relevant portion being determined by validating the collected sensor data based on a set of validation criteria and evaluating the collected sensor data based on a set of evaluation criteria;
creating at least one data file based on the one or more received data logs; and
pushing the at least one data file to a data warehouse.

12. A method according to claim 11, wherein the step of creating a data file comprises:
checking the data log based on a set of checking criteria;
parsing the one or more data logs based on a set of parsing criteria.

13. A system for transmitting data from a vehicle, the system being configured to carry out the method of any of claims 1 to 10.

14. A system for receiving and transmitting data, the system being configured to carry out the method of claim 11 or claim 12.

15. A system according to claim 14, wherein the system comprises a server or cloud computing device.

16. A system for transmitting data from a vehicle, wherein the system comprises:
a vehicle system in the vehicle, the vehicle system being configured to carry out at least some of the steps of the method of any of claims 1 to 10; and
a remote system, the remote system being configured to carry out the method of claim 11 or claim 12.

17. A system according to claim 16, wherein the remote system comprises a server or cloud computing device.

18. A non-transitory computer readable medium including program instructions for causing a system to carry out the method of any of claims 1 to 12.

19. A vehicle integrating a vehicle system, wherein the vehicle system is configured to carry out at least some of the steps of the method of any of claims 1 to 10.
